# EUROPÄISCHE PATENTSCHRIFT

(11) **EP 2 317 186 B1**
(45) Veröffentlichungstag und Bekanntmachung des Hinweises auf die Patenterteilung: **23.11.2011**
(21) Anmeldenummer: 10188741.2
(22) Anmeldetag: 02.10.2004
(51) Int. Cl.: F16H 63/30, F16D 25/10, F16D 25/0638, F16D 13/72

(54) **Betätigungsanordnung in einem Getriebe für zwei druckmittelbetätigbare Schaltelemente**
Actuating arrangement in a transmission for two pressure actuable shift elements
Système d'actionnement dans une transmission pour deux éléments de passage de vitesses actionnables sous pression

(30) Priorität: 30.10.2003 DE 10350759
(43) Veröffentlichungstag der Anmeldung: 04.05.2011
(62) Teilanmeldung aus: 04765779.6
(73) Patentinhaber: ZF Friedrichshafen AG, 88038 Friedrichshafen (DE)
(72) Erfinder: Gierling, Armin, 88085, Langenargen (DE)

(56) Entgegenhaltungen:
- EP-A- 1 195 537
- DE-U- 9 114 528
- US-A- 3 823 802
- US-A1- 2003 087 720

## Beschreibung

Die Erfindung betrifft eine Betätigungsanordnung in einem Getriebe für zwei druckmittelbetätigbare Schaltelemente gemäß dem Oberbegriff des Patentanspruchs 1.

Aus der US 2003/0087720 A1 ist ein Stufenautomatgetriebe mit einem Planetensatz und druckmittelbetätigbaren Getriebeschaltelementen bekannt. Diese Getriebeschaltelemente sind als zwei schaltbare Kupplungen ausgebildet, die einen gemeinsamen Außenlamellenträger zur Aufnahme von Außenlamellen der Kupplungen nutzen. Der gemeinsame Außenlamellenträger weist eine topfförmige Halbquerschnittsgeometrie auf, dessen Symmetrieachse mit der Längsachse einer Getriebeeingangswelle zusammenfällt. Dadurch bildet der Außenlamellenträger einen Kupplungsraum, innerhalb dessen die Lamellenpakete und die Servoeinrichtungen beider Kupplungen angeordnet sind.

Die beiden hier näher zu betrachtenden Lamellenpakete der genannten Kupplungen sind axial und radial unmittelbar nebeneinander angeordnet. Zudem wirken die Servoeinrichtungen derart auf die beiden Lamellenpakete, dass die Schließrichtung beider Kupplungen gleich ist und vom Topfboden des Auβenlamellenträgers wegweist. Dazu sind die Druckräume der beiden Servoeinrichtungen axial unmittelbar nebeneinander angeordnet.

Der Kolben der Servoeinrichtung zur Betätigung des zweiten, topfbodenfernen Lamellenpaketes befindet sich axial zwischen dem Kolben der Servoeinrichtung zur Betätigung der ersten, topfbodennahen Lamellenkupplung sowie dem Topfboden des Außenlamellenträgers. Außerdem ist der Kolben zur Betätigung des ersten, topfbodennahen Lamellenpaketes zwischen dem Kolben für das zweite, topfbodenferne Lamellenpaket und dem topfbodennahen Lamellenpaket angeordnet.

Zudem sei angemerkt, dass die Innenlamellen der beiden Kupplungen dieses bekannten Automatgetriebes von zwei separaten Innenlamellenträgern getragen werden.

Durch diesen Aufbau ergibt es sich, dass der Kolben zur Betätigung des zweiten, topfbodenfernen Lamellenpaketes die beiden Druckräume der beiden Servoeinrichtungen axial voneinander trennt.

Ein weiteres Merkmal dieses Getriebes ist, dass nur der Servoeinrichtung zur Betätigung des ersten, topfbodennahen Lamellenpaketes ein Raum für einen dynamischen Betätigungsdruckausgleich zugeordnet ist. Dabei trennt der genannte Kolben zur Betätigung des ersten, topfbodennahen Lamellenpaketes den Druckraum für diesen Kolben sowie den Druckausgleichsraum axial voneinander.

Als nachteilig bei diesem Getriebe wird nun erachtet, dass der Druck im Druckraum der Servoeinrichtung zur Betätigung der ersten, topfbodennahen Kupplung den Druck im Druckraum der Servoeinrichtung zur Betätigung der zweiten, topfbodenfernen Kupplung beeinflusst und umgekehrt.

Außerdem wird es als konstruktiv aufwendig beurteilt, dass der Kolben zur Betätigung der zweiten, topfbodenfernen Kupplung die Außenlamellen der ersten, topfbodennahen Kupplung axial durchgreift. Dazu sind die Außenlamellen der topfbodennahen ersten Kupplung im Bereich ihres Außendurchmessers mit axialen Durchgriffsöffnungen ausgestattet, durch die der genannte Kolben geführt ist. Dazu müssen die Außenlamellen der ersten Lamellenkupplung radial vergleichsweise lang ausgebildet sein, was schließlich zu einem vergröβerten Durchmesser des Getriebes führt.

Weiterhin ist aus der gattungs bildenden DE 91 14 528 U1 eine Anordnung mit zwei ineinander verschachtelt angeordneten Lamellenkupplungen in Art einer Doppelkupplung bekannt, bei der die Lamellenpakete axial nebeneinander links und rechts neben einem lamellenträgerfesten Anschlag auf einem gemeinsamen antriebswellenfesten Innenlamellenträger montiert sind. Zur Betätigung dieser beiden Lamellenkupplungen unabhängig voneinander sind zwei hydraulische Servoeinrichtungen vorgesehen, mit je einem räumlich gesehen radial unterhalb der Lamellenpakete angeordneten Druckraum und mit je einem axial verschiebbar an dem Innenlamellenträger gelagerten hydraulisch betätigbaren Kolben, welcher das jeweils zugeordnete Lamellenpaket beim Schließen der jeweiligen Kupplung axial gegen den genannten Anschlag drückt. Die Betätigungsrichtung der Servoeinrichtungen ist also unterschiedlich. Während der linke Kolben das offene Ende des zylinderförmigen Innenlamellenträger meanderförmig in axialer und radialer Richtung umgreift, weist der rechte Kolben umfangsverteilt axial gerichtete Durchbrüche zum Durchgriff durch den Innenlamellenträger in axialer Richtung auf.

Vor diesem Hintergrund besteht die Aufgabe an die Erfindung, eine alternative Konstruktion für eine Betätigungsanordnung für zwei Schaltelemente der beschriebenen Art vorzustellen. In Abkehr vom genannten Stand der Technik der US 2003/0087720 A1 sollen dabei die beiden Schaltelemente des Getriebes druckunabhängig voneinander betätigbar sein. In Abkehr vom genannten Stand der Technik der DE 91 14 528 U1 sollen dabei die beiden Schaltelemente beim Schließen die gleiche Betätigungsrichtung aufweisen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Erfindung geht von der Erkenntnis aus, dass sich die gestellte Aufgabe lösen lässt, wenn abweichend vom Stand der Technik der US 2003/0087720 A1 bei vorgegebenerweise gleichen Betätigungsvorrichtung ein gemeinsamer Innenlamellenträger die Innenlamellen axial unmittelbar benachbarter Lamellen-Reibschaltelemente trägt.

Demnach betrifft die Erfindung eine Betätigungsanordnung in einem Stufenautomatgetriebe für zwei axial unmittelbar hintereinander und radial im wesentlichen am gleichen Getriebedurchmesser angeordnete druckmittelbetätigbare Reibschaltelemente, denen jeweils eine eigene Servoeinrichtung zugeordnet ist.

Diese Betätigungsanordnung ist darüber hinaus dadurch gekennzeichnet, dass die Schaltelemente als Lamellenkupplung oder Lamellenbremse ausgebildet sind, deren Innenlamellen und Außenlamellen auf Lamellenträgern befestigt sind, dass die Innenlamellen beider Lamellenkupplungen bzw. Lamellenbremsen auf einem gemeinsamen Innenlamellenträger angeordnet sind, dass der Innenlamellenträger hinsichtlich seiner Querschnittsgeometrie als axial einseitig geöffneter Topf ausgebildet ist, und dass die beiden Servoeinrichtungen radial zumindest überwiegend innerhalb des durch den topfförmigen Innenlamellenträger gebildeten Topfraum angeordnet sowie zumindest teilweise axial nebeneinander und im wesentlichen radial unterhalb der Lamellenpakete der beiden Schaltelemente positioniert sind.

Dieser Aufbau der Betätigungsanordnung erlaubt nun, dass bei einer Druckbeaufschlagung der Druckräume der beiden Servoeinrichtungen zum separaten Schließen der beiden Lamellenkupplungen die beiden Kolben individuell und achsparallel in Richtung zum Topfboden des Innenlamellenträgers bewegbar sind. Dabei erfolgt das Schließen der beiden Lamellenkupplungen in die gleiche axiale Richtung.

Zur weiteren Verbesserung einer solchen, an sich schon funktionsfähigen Betätigungsanordnung für zwei Lamellenkupplungen der genannten Art kann in Weiterbildung der Erfindung vorgesehen sein, dass den Servoeinrichtungen axial benachbart jeweils ein Druckausgleichsraum für den dynamischen Betätigungsdruckausgleich zugeordnet ist.

Die erfindungsgemäßen Betätigungsanordnung für zwei nebeneinander angeordnete Lamellenkupplungen sieht vor, dass die Servoeinrichtung zur Betätigung des ersten, topfbodennahen Lamellenpaketes an den Topfboden des gemeinsamen Innenlamellenträgers angrenzt und zumindest überwiegend radial unterhalb des ersten topfnahen Lamellenpaketes sowie teilweise radial unterhalb des zweiten topfbodenfernen Lamellenpaketes angeordnet ist.

Zur weiteren Ausgestaltung kann vorgesehen sein, dass die Innenlamellen des zweiten, topfbodenfernen Lamellenpaketes umfangsverteilt axiale Durchbrüche aufweisen. Alternativ oder Additiv dazu kann der gemeinsame Innenlamellenträger im Bereich des zweiten, topfbodenfernen Lamellenpaketes an seiner radialen Außenseite über axial ausgerichtete Ausnehmungen verfügt.

Diese Durchbrüche in den Innenlamellen und die Ausnehmungen in dem gemeinsamen Innenlamellenträger sind umfangsverteilt sowie axial gleich ausgerichtet und bilden jeweils einen Durchführungsbereich für einen axialen Abschnitt des Kolbens der topfbodennahen Servoeinrichtung, der radial oberhalb des gemeinsamen Innenlamellenträgers ausgebildet ist.

Durch diese Durchbrüche und/oder die Ausnehmungen ist jeweils ein axialer Abschnitt eines axial beweglichen Kolbens der ersten, topfbodennahen Servoeinrichtung führbar.

Dabei können die Durchbrüche und/oder Ausnehmungen als Unterbrechung des Lamellenmitnahmeprofils am Innenlamellenträger und korrespondierend dazu an den Innenlamellen des zweiten, topfbodenfernen Lamellenpaketes ausgebildet sein.

Erfindungsgemäßer Bestandteil der vorgeschlagenen Betätigungsanordnung ist, dass die erste, topfbodennahe Servoeinrichtung zur Betätigung des ersten, topfbodennahen Lamellenpaketes einen axial beweglichen Kolben aufweist, der den gemeinsamen Innenlamellenträger an dessen offenen Topfseite mittels eines axial und radial ausgerichteten, ring- oder zylinderförmigen Drucktellers und axial ausgerichteten, mit dem Druckteller wirkverbundenen Fingern axial und radial umgreift. Dabei ist dieser Druckteller an seinem Innendurchmesser mit dem ersten, topfbodennahen Kolben verbunden. Die am Umkreis verteilt angeordneten Finger erstrecken sich ausgehend vom Außendurchmesser dieses Drucktellers axial in Richtung des ersten, topfbodennahen Lamellenpaketes und durchgreifen dabei die Durchbrüche in den Innenlamellen der topfbodenfernen Innenlamellen und/oder die Ausnehmungen in dem gemeinsamen Innenlamellenträger im wesentlichen in axialer Richtung zum Topfboden hin. Bei einer Druckbeaufschlagung des Druckraumes dieser topfbodennahen Servoeinrichtung drückt der Druckteller über die genannten Finger axial auf das erste topfbodennahe Lamellenpaket.

In diesem Zusammenhang wird als vorteilhaft angesehen, wenn die der ersten, topfbodennahen Kupplung zugeordneten Finger fest mit dem Druckteller der topfbodennahen Servoeinrichtung verbunden sind. Es kann aber auch vorgesehen sein, dass die genannten Finger als separate Bauteile ausgebildet sind, die dann lose und axial beweglich in die in den Innenlamellen der topfbodenfernen Innenlamellen vorgesehenen Durchbrüche und/oder in die in dem gemeinsamen Innenlamellenträger vorgesehenen Ausnehmungen eingelegt sind. In einer weitern alternativen Ausführung kann auch vorgesehen sein, dass anstelle des Drucktellers der ersten, topfbodennahen Servoeinrichtung und der sich axial an diesen Druckteller anschließenden Fingern ausschließlich mehrere, auf dem Umfang verteilt angeordnete Finger verwendet werden, die dann jeweils in etwa die Form eines "liegenden U" aufweisen und den gemeinsamen Innenlamellenträger an dessen offenen Topfseite axial und radial umgreifen. Das radial innere Finger-Ende ist dann also mit dem topfbodennahen Kolben verbunden, wobei das radial äußere Finger-Ende entsprechend auf das topfbodennahe Lamellenpaket wirkt.

Außerdem wird es in diesem Zusammenhang als sinnvoll angesehen, wenn die zweite, topfbodenferne Servoeinrichtung axial an die erste, topfbodennahe Servoeinrichtung angrenzt und zumindest teilweise radial unterhalb des zweiten, topfbodenfernen Lamellenpaketes sowie zumindest teilweise radial unterhalb eines axialen Abschnittes des Kolbens der ersten, topfbodennahen Servoeinrichtung angeordnet ist.

Zur Betätigung der zweiten, topfbodenfernen Lamellenkupplung ist vorgesehen, dass die zweite Servoeinrichtung über einen axial beweglichen Kolben verfügt, der den gemeinsamen Innenlamellenträger sowie den Kolben ersten der Servoeinrichtung samt seinem Druckteller außerhalb des Topfraumes in radialer und axialer Richtung umgreift, und bei einer Druckbeaufschlagung des Druckraumes dieser zweiten, topfbodenfernen Servoeinrichtung axial auf das zweite, topfbodenferne Lamellenpaket drückt. Dadurch erfolgt - wie bereits gesagt - das Schließen der beiden Lamellenkupplungen in die gleiche axiale Richtung.

Im Rahmen einer Weiterbildung einer erfindungsgemäß ausgebildeten Betätigungsanordnung kann es bei speziellen Getriebebauweisen sinnvoll sein, dass die Kühlölversorgung wenigstens eines der beiden Lamellenpakete über einen gesonderten Zuführweg erfolgt, der radial nicht durch den gemeinsamen Innenlamellenträger führt.

Letztlich wird es als vorteilhaft angesehen, wenn die Innenlamellen der Lamellenkupplungen als Belaglamellen ausgebildet sind.

Im Unterschied zu den bisher vorgestellten Schaltelementausbildungen kann auch vorgesehen sein, dass mindestens eines der beiden Schaltelemente als Getriebebremse ausgebildet ist. Ist nur eines der beiden Schaltelemente als Lamellenbremse ausgeführt, so ist dessen Außenlamellenträger drehfest mit dem Getriebegehäuse verbunden. Sind beiden Schaltelemente als Lamellenbremse ausgeführt, so ist entweder deren gemeinsamer Innenlamellenträger drehfest mit dem Getriebegehäuse verbunden, oder aber beide Außenlamellenträger der Lamellenträger sind drehfest mit dem Getriebegehäuse verbunden.

Zum besseren Verständnis der Erfindung ist der Beschreibung eine Zeichnung beigefügt, in der in zwei Figuren unterschiedliche Ausführungsformen des erfindungsgemäßen Grundprinzips dargestellt sind, am Beispiel von zwei nebeneinander angeordneten Lamellenkupplungen. Darin zeigen
- Fig. 1: einen schematischen Halbquerschnitt durch zwei axial hinterein- ander angeordnete Lamellenkupplungen eines Getriebes sowie zugehörige Betätigungseinrichtungen, als nicht beanspruchtes Konstruktionsbeispiel, und
- Fig. 2: eine Darstellung wie in Fig. 1, jedoch bei einer anderen bean- spruchten Betätigungsanordnung.

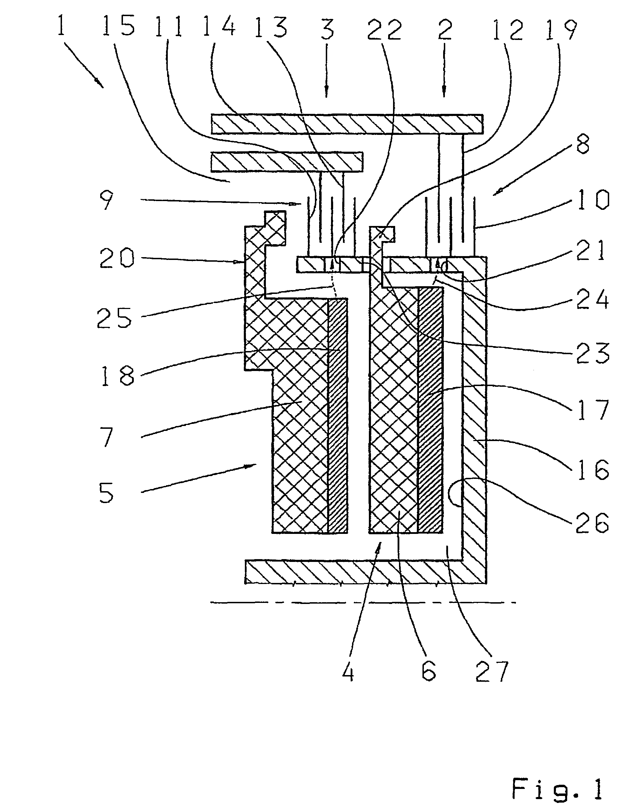

Wie Fig. 1 demnach zu entnehmen ist, umfasst die - nicht beanspruchte - erste Variante einer Betätigungsanordnung 1 zunächst zwei beispielhaft als Lamellenkupplungen 2, 3 ausgebildete Getriebeschaltglieder, deren Außenlamellen 12, 13 mit jeweils einen kupplungsindividuellen Auβenlamellenträger 14, 15 fest verbunden sind. Diese Außenlamellenträger 14, 15 stehen mit anderen, hier nicht dargestellten Bauteilen des Automatgetriebes in Wirkverbindung, so dass, wie aus der eingangs erwähnten US 2003/0087720 A1 bekannt, durch die Betätigung zumindest der beiden Lamellenkupplungen 2, 3 unterschiedliche Getriebeübersetzungsstufen realisierbar sind.

Darüber hinaus gehören zu jeder dieser beiden Lamellenkupplungen 2, 3 Innenlamellen 10 und 11, die axial wechselweise zu den genannten Außenlamellen 12, 13 drehfest und axial verschiebbar auf einen für beide Lamellenkupplungen 2, 3 gemeinsamen Innenlamellenträger 16 angeordnet sind. Dieser Innenlamellenträger 16 steht ebenfalls mit wenigstens einem weiteren, hier nicht dargestellten Getriebebauteil in Wechselwirkung.

Durch diesen Aufbau verfügt jede der beiden Lamellenkupplungen 2, 3 über ein Lamellenpaket 8 beziehungsweise 9, bei denen die Innenlamellen 10, 11 vorzugsweise als Belaglamellen ausgebildet sind.

Zudem wird darauf hingewiesen, dass der gemeinsame Innenlamellenträger 16 eine etwa topfförmige Querschnittsgeometrie aufweist, dessen Topfboden 26 durch einen radialen Abschnitt des Innenlamellenträgers 16 gebildet wird. Dadurch wird durch den Innenlamellenträger 16 ein sogenannter Topfraum 27 gebildet, der nach einer axialen Seite offen ist.

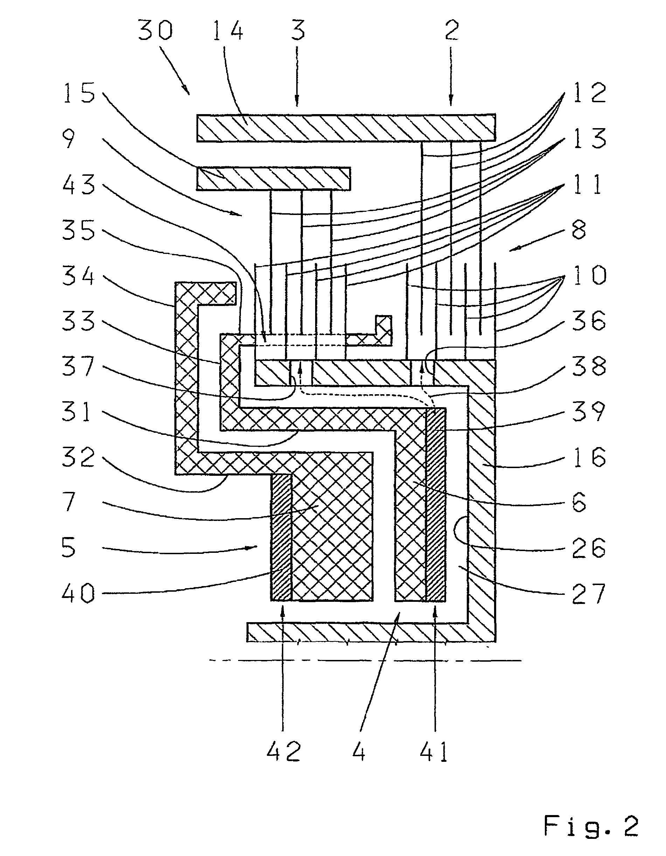

Den als Lamellenkupplungen 2, 3 ausgebildeten Getriebeschaltelementen in den Figuren 1 und 2 ist zur Kupplungsbetätigung jeweils eine eigene

Servoeinrichtung 4, 5 zugeordnet. Diese Servoeinrichtungen 4, 5 umfassen je einen Druckraum für ein vorzugsweise hydraulisches Druckmittel und jeweils einen Kolben 6, 7, wobei letztere axial beweglich in dem Topfraum 27 angeordnet sind. Der durch den gemeinsamen Innenlamellenträger 16 gebildete Topfraum 27 wird daher als Zylinder für die Kolben 6, 7 beider Servoeinrichtungen genutzt.

Wie Fig. 1 entnehmbar ist, sind den beiden Kolben 6, 7 Druckausgleichsräume 17, 18 für einen an sich bekannten dynamischen Betätigungsdruckausgleich zugeordnet, die über eine gemeinsame oder separate Zuführwege mit vorzugsweise einem Kühlöl befüllbar sind. Dieses Kühlöl kann an den jeweiligen radialen Ende der Druckausgleichsräume 17, 18 aus diesen austreten und über Strömungswege 24, 25 und radiale Durchbrüche 21, 22 in dem gemeinsamen Lamellenträger 16 zu den Lamellenpaketen 8, 9 der beiden Lamellenkupplungen 2, 3 gelangen.

Die in Fig. 1 dargestellte Betätigungsanordnung 1 zeichnet sich durch eine vergleichsweise einfache und axial kurze Bauweise aus. Dies wird im wesentlichen dadurch erreicht, dass an dem Kolben 6 der ersten, dem Topfboden 26 nahen Servoeinrichtung 4 am Umfang verteilt mehrere radiale Finger 19 ausgebildet sind, die in dem gemeinsamen Innenlamellenträger 16 am Umfang verteilt angeordnete radiale Ausnehmungen 23 durchgreifen. Diese Ausnehmungen 23 sind zwischen dem ersten, topfbodennahen Lamellenpaket 8 und dem zweiten, topfbodenfernen Lamellenpaket 9 positioniert. Jeder dieser Ausnehmungen 23 ist jeweils ein Finger 19 zugeordnet.

An ihren radial äußeren Enden weisen die Finger 19 des ersten Kolbens 6 jeweils eine Wirkfläche auf, die axial gegen das topfbodennahe Lamellenpaket 8 gerichtet ist. Bei einer Betätigung der ersten, topfbodennahen Servoeinrichtung 4 wird der Kolben 6 sozusagen ziehend achsparallel in Richtung zum Topfboden 26 bewegt, so dass die genannten Finger 19 die Lamellen 11, 12 des ersten Lamellenpaketes 8 die Lamellenkupplung 2 schließend zusammendrücken.

Zum Schließen der zweiten, topfbodenfernen Lamellenkupplung 3 verfügt der Kolben 7 der zweiten, topfbodenfernen Servoeinrichtung 5 über einen im wesentlichen radial ausgerichteten, ringförmigen Druckteller 20, der das topfbodenferne axial offene Ende des Innenlamellenträgers 16 axial und radial umgreift. An seinem Innendurchmesser ist dieser Druckteller 20 mit dem Kolben 7 verbunden. An seinem Außendurchmesser weist der Druckteller 20 eine Wirkfläche auf, die axial gegen das zweite, topfbodenferne Lamellenpaket 9 gerichtet ist. Eine Druckbeaufschlagung des zweiten, topfbodenfernen Kolbens 7 führt daher zu einer Kolben- und Drucktellerbewegung achsparallel in Richtung zum Topfboden 26 sowie zu einem Schließen der zweiten, topfbodenfernen Kupplung 3.

Zur Vereinfachung der Darstellung ist die genaue Ausbildung der Druckräume zur Betätigung der Kolben 6, 7 der beiden Servoeinrichtungen 4, 5 in den Figuren 1 und 2 nicht im Detail dargestellt. Da die beiden Kolben 6, 7 unabhängig voneinander und ohne Druckbeeinflussung durch die jeweils andere Servoeinrichtung betätigbar sind, ist es sinnvoll, dass die genanten Druckräume jeweils auf der druckausgleichsraumfernen Seite der Kolben 6, 7 angeordnet sind. Zudem ist vorzusehen, dass zwischen den beiden Druckräumen oder einem Druckraum und einem benachbarten Druckausgleichsraum jeweils eine drucktrennende Wand angeordnet ist.

Fig. 2 zeigt eine - beanspruchte - zweite konstruktiv konkrete Variante der Erfindung. Bei dieser Betätigungsanordnung 30 ist der Aufbau der Außenlamellenträger 14 und 15 sowie des gemeinsamen Innenlamellenträgers 16 mitsamt der daran befestigten Innenlamellen 10, 11 und Außenlamellen 12, 13 weitgehend identisch zu der Variante gemäß Figur 1. Außerdem sind auch bei dieser Betätigungsanordnung 30 in dem durch den Innenlamellenträger 16 gebildeten Topfraum 27 zwei Servoeinrichtungen 4, 5 eingebaut, für die bezüglich der Druckräume, der Kolben 6, 7 und der Druckausgleichräume 39, 40 die vorangegangenen Konstruktionsmerkmale weitgehend zutreffen.

Im Unterschied zu der Bauform gemäß Fig. 1 erfolgt die Kühlölversorgung der beiden Lamellenpakete 8, 9 der beiden Kupplungen 2, 3 hier über einen weitgehend gemeinsamen Strömungsweg 38, der an einer Kühlölaustrittsöffnung an radialen Ende des topfbodennahen Druckausgleichsraumes 39 beginnt und dann durch den jeweiligen Lamellenpaketen 8, 9 zugeordnete radiale Kühlöldurchtrittsöffnungen 36, 37 führt.

Eine weitere Besonderheit dieser Betätigungsanordnung 30 betrifft die beiden Kolben 6 und 7, die jeweils über weitgehend im Topfraum 27 angeordnete axiale Abschnitte 31, 32 verfügen, an deren topfbodenfernen Enden ringförmige Druckteller 33, 34 ausgebildet sind. Ausgehend vom dem topfbodenfernen Ende des jeweiligen axialen Kolben-Abschnitts 31, 32 erstrecken sich diese Druckteller 33, 34 radial nach außen bis in den Bereich der radialen Ausdehnung der beiden Lamellenpakete 8, 9. Die axialen Abschnitte 31, 32 der Kolben 6, 7 können auch als Teile der Druckteller 33, 34 interpretiert werden. Je nach geometrischer Ausbildung der Kolben können die genannten axialen Abschnitte 31, 32 auch entfallen, wobei sich die genannten Druckteller 33, 34 dann direkt am Außendurchmesser der Kolben 6, 7 anschließen. In einer alternativen konstruktiven Ausgestaltung können die Druckteller 33, 34 auch durch mehrerer, am Umfang verteilt angeordnete radiale Finger ersetzt sein.

An dem Außendurchmesser des Drucktellers 33 des ersten, topfbodennahen Kolbens 6 sind axial ausgerichtete Finger 35 ausgebildet, die sich radial oberhalb des gemeinsamen Lamellenträgers 16 befinden und im wesentlichen achsparallel in Richtung zurück zu dem Topfboden 26 ausgerichtet sind. Dabei durchgreifen die axial ausgerichteten Finger 35 axiale Durchbrüche 43 in den Innenlamellen 11 des topfbodenfernen Lamellenpaketes 9 und/oder axiale Aussparungen an der radialen Außenseite des Innenlamellenträgers 16 im Bereich dieses Lamellenpaketes 9.

Diese Durchbrüche 43 in den Innenlamellen 11 bzw. diese Ausnehmungen in dem Innenlamellenträger 16 sind umfangsverteilt axial gleich ausgerichtet und bilden somit jeweils einen Durchführungsbereich, durch den jeweils einer der axial ausgerichteten Finger 35 führbar ist, die dem Kolben 6 der Servoeinrichtung 4 der ersten, topfbodennahen Lamellenkupplung 2 zugeordnet sind.

An ihrem topfbodennahen (freien) Ende weisen die axialen Finger 35 eine Wirkfläche auf, die bei einer Druckbeaufschlagung des topfbodennahen Kolbens 6 die Lamellen 10, 12 des ersten, topfbodennahen Lamellenpaketes 8 sozusagen ziehend achsparallel in Richtung zum Topfboden 26 zusammendrückt. Zur Erzielung einer in Umfangsrichtung gesehen möglichst gleichmäßigen Druckverteilung beim Betätigung des Lamellenpaketes 8 der ersten Lamellenkupplung 2 sind zweckmäßigerweise mehrere dieser axialen Finger 35 vorgesehen, die kreissymmetrisch auf dem Umfang verteilt angeordnet sind, die Durchbrüche 43 in den Innenlamellen 11 der zweiten (topfbodenfernen) Lamellenkupplung 3 und/oder die axialen Ausnehmungen in dem gemeinsamen Innenlamellenträger 16 im wesentlichen in axialer Richtung zum Topfboden 26 hin durchgreifen und alle mit ihrem topfbodenseitigen Ende auf das Lamellenpaket 8 der ersten (topfbodennahen) Lamellenkupplung (2) wirken.

In einer konstruktiven Ausgestaltung kann beispielsweise vorgesehen sein, dass die Durchbrüche 43 und/oder die axial ausgerichteten Ausnehmungen in dem Innenlamellenträger 16 in Umfangsrichtung gesehen als Unterbrechung des Lamellenmitnahmeprofils am Innenlamellenträger 16 und korrespondierend dazu an den Innenlamellen 11 des zweiten, topfbodenfernen Lamellenpaketes 9 ausgebildet sind.

Im Verlauf seiner radialen Erstreckung umgreift der Druckteller 34 des zweiten, topfbodenfernen Kolbens 7 den scheibenförmigen Druckteller 33 des ersten, topfbodennahen Kolbens 6 außerhalb des Topfraumes 27 des Innenlamellenträgers 16 radial und axial. Im Bereich seines Außendurchmessers und an seiner dem Topfboden 26 zugewandten Seite weist der Druckteller 34 dabei eine freie Wirkfläche auf, die auf die Lamellen des zweiten, topfbodenfernen Lamellenpaketes 9 gerichtet ist. Bei einer Druckbeaufschlagung des topfbodenfernen Kolbens 7 bewegt sich daher dieser Kolben 7 zusammen mit dem Druckteller 34 sozusagen ziehend achsparallel in Richtung zum Topfboden 26 hin, wodurch das topfbodenferne Lamellenpaket 9 geschlossen wird.

Wie Fig. 2 außerdem zeigt, sind in dem hier dargestellten Ausführungsbeispiel die Druckausgleichsräume 39, 40 rechts- oder links vom jeweils zugeordneten Kolben 6 beziehungsweise 7 angeordnet. Die Zufuhr von Kühlmittel - vorzugsweise Kühlöl - in diese beiden Druckausgleichsräume 39, 40 erfolgt über hier vereinfach dargestellte getrennte Zuführwege 41, 42, wenngleich auch ein beiden Druckausgleichsräumen 39, 40 gemeinsamer Zuführweg möglich ist.

Abweichend von dem Schaltelementaufbau als Getriebekupplung gemäß den Ausführungsbeispielen der Figuren 1 und 2 kann alternativ dazu vorgesehen sein, dass mindestens eines der beiden Schaltelemente als Getriebebremse ausgebildet ist. Sind beide Schaltelemente als Lamellenbremse ausgebildet, so ist entweder deren gemeinsamer Innenlamellenträger drehfest mit einem hier nicht dargestellten Getriebegehäuse verbunden, oder aber es sind deren getrennte Außenlamellenträger drehfest mit dem Getriebegehäuse verbunden. Ist nur eines der beiden Schaltelemente als Lamellenbremse ausgebildet, so ist dann der Außenlamellenträger dieser Lamellenbremse drehfest mit dem Getriebegehäuse verbunden. Der Fachmann wird den mit dem Getriebegehäuse wirkverbundenen Lamellenträger bei Bedarf auch direkt in das Getriebegehäuse integrieren.

Das Getriebe selber kann beispielsweise als Stufenautomatgetriebe, stufenloses Automatgetriebe, automatisiertes Schaltgetriebe oder Doppelkupplungsgetriebe ausgeführt sein, unter Verwendung von mindestens dieser erfindungsgemäßen Baugruppe mit zwei Schaltelementen.

### Bezugszeichen

- 1: Betätigungsanordnung
- 2: Erstes Reibschaltelement, erste Lamellenkupplung
- 3: Zweites Reibschaltelement, zweite Lamellenkupplung
- 4: Erste Servoeinrichtung
- 5: Zweite Servoeinrichtung
- 6: Kolben der ersten Servoeinrichtung
- 7: Kolben der zweiten Servoeinrichtung
- 8: Lamellenpaket der ersten Lamellenkupplung
- 9: Lamellenpaket der zweiten Lamellenkupplung
- 10: Innenlamellen der ersten Lamellenkupplung
- 11: Außenlamellen der ersten Lamellenkupplung
- 12: Innenlamellen der zweiten Lamellenkupplung
- 13: Außenlamellen der zweiten Lamellenkupplung
- 14: Außenlamellenträger der ersten Lamellenkupplung
- 15: Außenlamellenträger der zweiten Lamellenkupplung
- 16: Gemeinsamer Innenlamellenträger
- 17: Druckausgleichsraum der ersten Servoeinrichtung
- 18: Druckausgleichsraum der zweiten Servoeinrichtung
- 19: Finger an erstem Kolben
- 20: Druckteller an zweitem Kolben
- 21: Erster radialer Durchbruch am Innenlamellenträger
- 22: Zweiter radialer Durchbruch am Innenlamellenträger
- 23: Radiale Ausnehmung am Innenlamellenträger für die Finger
- 24: Strömungsweg zur erster Lamellenkupplung
- 25: Strömungsweg zur zweiter Lamellenkupplung
- 26: Topfboden des Innenlamellenträgers
- 27: Topfraum
- 30: Betätigungsanordnung
- 31: Axialer Abschnitt am ersten Kolben
- 32: Axialer Abschnitt am zweiten Kolben
- 33: Druckteller am ersten Kolben
- 34: Druckteller am zweiten Kolben
- 35: Axiale Finger des ersten Kolbens
- 36: Radiale Kühlölöffnung am Innenlamellenträger
- 37: Radiale Kühlölöffnung am Innenlamellenträger
- 38: Strömungsweg für Kühlöl
- 39: Druckausgleichsraum an erster Servoeinrichtung
- 40: Druckausgleichsraum an erster Servoeinrichtung
- 41: Zuführung für Kühlöl in den ersten Druckausgleichsraum 41
- 42: Zuführung für Kühlöl in den zweiten Druckausgleichsraum 42
- 43: Axialer Durchbruch durch Innenlamellen

## Patentansprüche

1. Betätigungsanordnung (30) für zwei axial unmittelbar hintereinander und radial im wesentlichen am gleichen Getriebedurchmesser angeordnete, als Lamellenkupplungen oder Lamellenbremsen ausgebildete druckmittelbetätigbare Reibschaltelemente (2, 3) in einem Getriebe, deren Innenlamellen (10, 11) und Außenlamellen (12, 13) an Lamellenträgern befestigt sind, und denen jeweils eine Servoeinrichtung (4, 5) zugeordnet ist, wobei
- die Innenlamellen (10, 11) beider Reibschaltelemente (2, 3) an einem gemeinsamen Innenlamellenträger (16) angeordnet sind,
- der Innenlamellenträger (16) hinsichtlich seiner Querschnittsgeometrie als axial einseitig geöffneter Topf ausgebildet ist,
- die beiden Servoeinrichtungen (4, 5) radial zumindest überwiegend innerhalb des durch den topfförmigen Innenlamellenträger (16) gebildeten Topfraum (27) angeordnet sowie zumindest teilweise axial nebeneinander und im Wesentlichen radial unterhalb von Lamellenpaketen (8, 9) der beiden Reibschaltelemente (2, 3) positioniert sind,
- das erste Reibschaltelement (2) nahe einem Topfboden (26) des Innenlamellenträgers (16) angeordnet ist und
- die beiden Reibschaltelemente (2, 3) durch die Servoeinrichtungen (4, 5) individuell und voneinander unabhängig betätigbar sind, **dadurch geken nzeichnet** , dass jede der beiden Servoeinrichtungen (4, 5) über einen axial beweglichen Kolben (6, 7) verfügt, bei dem im Bereich seines Außendurchmessers ein radial ausgerichteter Druckteller (33, 34) ausgebildet ist, dessen radial freies Ende auf ein der jeweiligen Servoeinrichtung (4, 5) zugeordnetes Lamellenpaket (8, 9) wirkt und dabei das topfbodenferne axial offene Ende des Innenlamellenträgers (16) in radialer Richtung übergreift und in axialer Richtung übergreifen kann.

2. Betätigungsanordnung nach Anspruch 1, **dadurch gekennzeichnet,**
- **dass** die Innenlamellen (11) des Lamellenpaketes (9) des zweiten, topfbodenfernen Reibschaltelementes (3) umfangsverteilt axiale Durchbrüche (43) aufweisen und/oder dass der Innenlamellenträger (16) zumindest im Bereich des Lamellenpaketes (9) des zweiten Reibschaltelementes (3) an seiner radialen Außenseite umfangsverteilt axial ausgerichtete Ausnehmungen aufweist,
- wobei diese Durchbrüche (43) in den Innenlamellen (11) des zweiten Reibschaltelementes (3) bzw. diese Ausnehmungen in dem Innenlamellenträger (16) umfangsverteilt axial gleich ausgerichtet sind und jeweils einen Durchführungsbereich bilden, durch den jeweils ein axial ausgerichteter Finger (35) führbar ist, der dem Kolben (6) der Servoeinrichtung (4) des ersten, topfbodennahen Reibschaltelementes (2) zugeordnet ist,
- und wobei zur Betätigung des ersten Reibschaltelementes (2) mehrere dieser axialen Finger (35) vorgesehen sind, die auf dem Umfang verteilt angeordnet sind, die axialen Durchbrüche (43) in den Innenlamellen (11) des zweiten Reibschaltelementes (3) und/oder die axial ausgerichteten Ausnehmungen in dem Innenlamellenträger (16) im wesentlichen in axialer Richtung zum Topfboden (26) hin durchgreifen und mit ihrem topfbodenseitigen Ende auf das Lamellenpaket (8) des ersten Reibschaltelementes (2) wirken.

3. Betätigungsanordnung nach Anspruch 2, **dadurch gekennzeichnet, dass** die Durchbrüche (43) und/oder die axial ausgerichteten Ausnehmungen in dem Innenlamellenträger (16) in Umfangsrichtung gesehen als Unterbrechung des Lamellenmitnahmeprofils am Innenlamellenträger (16) und korrespondierend dazu an den Innenlamellen (11) des zweiten topfbodenfernen Lamellenpaketes (9) ausgebildet sind.

4. Betätigungsanordnung nach Anspruch 2 oder 3, **dadurch gekenn zeichnet,**
- dass die dem ersten, topfbodennahen Reibschaltelement (2) zugeordnete erste Servoeinrichtung (4) an den Topfboden (26) des Innenlamellenträgers (16) angrenzt und zumindest überwiegend radial unterhalb des Lamellenpaketes (8) des ersten, topfbodennahen Reibschaltelementes (2) sowie teilweise radial unterhalb des Lamellenpaketes (9) des zweiten, topfbodenfernen Reibschaltelementes (3) angeordnet ist,
- dass die erste Servoeinrichtung (4) an ihrem Kolben (6) einen Druckteller (33) aufweist, der das topfbodenferne axial offene Ende des Innenlamellenträgers (16) in radialer Richtung übergreift, an seinem Außendurchmesser mit den axial ausgerichteten Fingern (35) fest verbunden oder wirkverbunden ist und das Lamellenpaket (8) des ersten Reibschaltelementes (2) bei dessen Schließen über diese Finger (35) axial in Richtung Topfboden (26) des Innenlamellenträgers (16) betätigt,
- dass die dem zweiten, topfbodenfernen Reibschaltelement (3) zugeordnete zweite Servoeinrichtung (5) axial an die erste Servoeinrichtung (4) angrenzt und zumindest teilweise radial unterhalb des Lamellenpaketes (9) des zweiten Reibschaltelementes (3) sowie zumindest teilweise radial unterhalb eines axialen Abschnittes (31) des Kolbens (6) der ersten Servoeinrichtung (4) angeordnet ist und
- dass die zweite Servoeinrichtung (5) an ihrem Kolben (7) einen Druckteller (34) aufweist, der den Druckteller (33) des Kolbens (6) der ersten Servoeinrichtung (4) außerhalb des Topfraumes (27) des Innenlamellenträgers (16) in radialer und axialer Richtung übergreift und das Lamellenpaket (9) des zweiten Reibschaltelementes (3) bei dessen Schließen axial in Richtung Topfboden (26) des Innenlamellenträgers (16) betätigt.

5. Betätigungsanordnung nach einem der Ansprüche 1 bis 4, **dadurch gekennzeichnet, dass** der Druckteller (33) des Kolbens (6) der ersten Servoeinrichtung (4) und/oder der Druckteller (34) des Kolbens (7) der zweiten Servoeinrichtung (5) im Wesentlichen ringförmig ausgebildet ist.

6. Betätigungsanordnung nach einem der Ansprüche 1 bis 4, **dadurch g ekennzeichnet,** dass der Druckteller (33) des Kolbens (6) der ersten Servoeinrichtung (4) und/oder der Druckteller (34) des Kolbens (7) der zweiten Servoeinrichtung (5) als ein Verbund aus mehreren umfangverteilten Fingern ausgebildet ist.

7. Betätigungsanordnung nach einem der vorigen Ansprüche, **dadurch gekennzeichnet, dass** die beiden Kolben (6, 7) der Servoeinrichtungen (4, 5) axial unmittelbar nebeneinander angeordnet sind.

8. Betätigungsanordnung nach einem der vorigen Ansprüche, **dadurch gekennzeichnet, dass** die erste Servoeinrichtung (4) und/oder die zweite Servoeinrichtung (5) einen dynamischen Betätigungsdruckausgleich aufweisen.

9. Betätigungsanordnung nach Anspruch 8, **dadurch gekennzeichnet, dass** die Druckausgleichsräume (39; 40) des dynamischen Betätigungsdruckausgleichs der Servoeinrichtungen (4; 5) axial benachbart zu den jeweiligen Druckräumen der Servoeinrichtungen (4; 5) angeordnet sind.

10. Betätigungsanordnung nach Anspruch 8 oder 9, **dadurch gekenn zeichnet** , dass der dem ersten, topfbodennahen Kolben (6) zugeordnete Druckausgleichsraum (39) axial an den Topfboden (26) des Innenlamellenträgers (16) angrenzt.

11. Betätigungsanordnung nach Anspruch 8, 9 oder 10, **dadurch geke nnzeichnet,** dass der dem zweiten, topfbodenfernen Kolben (7) zugeordnete Druckausgleichsraum (40) axial auf der Seite des zweiten, topfbodenfernen Kolbens (7) angeordnet ist, die dem ersten, topfbodennahen Kolben (6) gegenüber liegt.

12. Betätigungsanordnung nach einem der Ansprüche 8 bis 11, **dadurch gekennzeichnet, dass** der Druckausgleichsraum (40) der zweiten Servoeinrichtung (5) im Bereich des topfbodenfernen axialen Randes des Innenlamellenträgers (16) angeordnet ist.

13. Betätigungsanordnung nach einem der Ansprüche 8 bis 12, **dadurch gekennzeichnet, dass** der dem jeweiligen Kolben (6; 7) zugeordnete Druckausgleichsraum (39; 40) räumlich gesehen entweder axial links oder axial rechts von dem Druckraum angeordnet ist, der dem jeweiligen Kolben (6; 7) zugeordnet ist.

14. Betätigungsanordnung nach einem der Ansprüche 8 bis 13, **dadurch gekennzeichnet, dass** den Lamellen (10, 12; 11, 13) der beiden Reibschaltelemente (2, 3) Kühlöl zugeführt wird, das aus dem dem ersten Reibschaltelement (2) zugeordneten Druckausgleichsraum (39) über einen Strömungsweg (38) abfließen kann, der zwischen der radialen Außenseite dieses Druckausgleichsraumes (39) und der radialen Innenseite des Innenlamellenträgers (16) ausgebildet ist und durch radiale Öffnungen (36, 37) im Innenlamellenträger (16) führt, die räumlich gesehen im Bereich der Lamellenpakete (8, 9) der beiden Reibschaltelemente (2, 3) angeordnet sind.

15. Betätigungsanordnung nach einem der vorigen Ansprüche, **dadurch gekennzeichnet, dass** die Kühlölversorgung wenigstens eines der Lamellenpakete (8, 9) der beiden Reibschaltelemente (2, 3) durch gesonderte Zuführwege erfolgt, die nicht durch den gemeinsamen Innenlamellenträger (16) führen.

## Claims

1. Actuating arrangement (30) for two pressure-medium-actuable frictional shift elements (2, 3), which are arranged axially directly one behind the other and radially substantially at the same transmission diameter and which are designed as multiplate clutches or multiplate brakes, in a transmission, the inner plates (10, 11) and outer plates (12, 13) of which frictional shift elements are fastened to plate carriers, and which frictional shift elements are assigned in each case one servo device (4, 5),
- with the inner plates (10, 11) of the two frictional shift elements (2, 3) being arranged on a common inner plate carrier (16),
- with the inner plate carrier (16) being designed, in terms of its cross-sectional geometry, as a pot which is open axially at one side,
- with the two servo devices (4, 5) being arranged radially at least predominantly within the pot chamber (27) formed by the pot-shaped inner plate carrier (16) and at least partially axially adjacent to one another and substantially radially below plate packs (8, 9) of the two frictional shift elements (2, 3),
- with the first frictional shift element (2) being arranged close to a pot base (26) of the inner plate carrier (16), and
- with it being possible for the two frictional shift elements (2, 3) to be actuated individually and independently of one another by the servo devices (4, 5), **characterized in that** each of the two servo devices (4, 5) has an axially movable piston (6, 7) on which, in the region of the outer diameter thereof, is formed a radially aligned thrust plate (33, 34) whose radially free end acts on the plate pack (8, 9) assigned to each servo device (4, 5) and in so doing engages in the radial direction over, and can engage in the axial direction over, the axially open end, which is remote from the pot base, of the inner plate carrier (16).

2. Actuating arrangement according to Claim 1, **characterized**
- **in that** the inner plates (11) of the plate pack (9) of the second frictional shift element (3) remote from the pot base have circumferentially distributed axial apertures (43), and/or in that the inner plate carrier (16) has circumferentially distributed, axially aligned recesses on its radially outer side at least in the region of the plate pack (9) of the second frictional shift element (3),
- wherein said apertures (43) in the inner plates (11) of the second frictional shift element (3) and/or said recesses in the inner plate carrier (16) are aligned axially in the same direction in a circumferentially distributed manner and form in each case one leadthrough region through which can be guided in each case one axially aligned finger (35) which is assigned to the piston (6) of the servo device (4) of the first frictional shift element (2) close to the pot base,
- and wherein, for the actuation of the first frictional shift element (2), a plurality of said axial fingers (35) are provided which are arranged distributed about the circumference, which extend through the axial apertures (43) in the inner plates (11) of the second frictional shift element (3) and/or through the axially aligned recesses in the inner plate carrier (16) substantially in the axial direction towards the pot base (26), and which act with their pot-side end on the plate pack (8) of the first frictional shift element (2).

3. Actuating arrangement according to Claim 2, **characterized in that** the apertures (43) and/or the axially aligned recesses in the inner plate carrier (16) are formed, as viewed in the circumferential direction, as a discontinuity of the plate driving profile on the inner plate carrier (16) and correspondingly thereto on the inner plates (11) of the second plate pack (9) remote from the pot base.

4. Actuating arrangement according to Claim 2 or 3, **characterized**
- **in that** the first servo device (4) which is assigned to the first frictional shift element (2) close to the pot base adjoins the pot base (26) of the inner plate carrier (16) and is arranged at least predominantly radially below the plate pack (8) of the first frictional shift element (2) close to the pot base and partially radially below the plate pad (9) of the second frictional shift element (3) remote from the pot base,
- **in that** the first servo device (4) has, on its piston (6), a thrust plate (33) which engages in the radial direction over the axially open end, which is remote from the pot base, of the inner plate carrier (16) and which is fixedly connected or operatively connected on its outer diameter to the axially aligned fingers (35) and which actuates the plate pack (8) of the first frictional shift element (2), when closing the latter, axially in the direction of the pot base (26) of the inner plate carrier (16) via said fingers (35),
- **in that** the second servo device (5) assigned to the second frictional shift element (3) remote from the pot base axially adjoins the first servo device (4) and is arranged at least partially radially below the plate pack (9) of the second frictional shift element (3) and at least partially radially below an axial portion (31) of the piston (6) of the first servo device (4), and
- **in that** the second servo device (5) has, on its piston (7), a thrust plate (34) which engages in the radial and axial direction over the thrust plate (33) of the piston (6) of the first servo device (4) outside the pot chamber (27) of the inner plate carrier (16), which thrust plate (34) actuates the plate pack (9) of the second frictional shift element (3), when closing the latter, axially in the direction of the pot base (26) of the inner plate carrier (16).

5. Actuating arrangement according to one of Claims 1 to 4, **characterized in that** the thrust plate (33) of the piston (6) of the first servo device (4) and/or the thrust plate (34) of the piston (7) of the second servo device (5) is of substantially annular design.

6. Actuating arrangement according to one of Claims 1 to 4, **characterized in that** the thrust plate (33) of the piston (6) of the first servo device (4) and/or the thrust plate (34) of the piston (7) of the second servo device (5) is designed as a combination of a plurality of circumferentially distributed fingers.

7. Actuating arrangement according to one of the preceding claims, **characterized in that** the two pistons (6, 7) of the servo devices (4, 5) are arranged axially directly adjacent to one another.

8. Actuating arrangement according to one of the preceding claims, **characterized in that** the first servo device (4) and/or the second servo device (5) have/has a dynamic actuating pressure compensation means.

9. Actuating arrangement according to Claim 8, **characterized in that** the pressure compensation chambers (39; 40) of the dynamic actuating pressure compensation means of the servo devices (4; 5) are arranged axially adjacent to the respective pressure chambers of the servo devices (4; 5).

10. Actuating arrangement according to Claim 8 or 9, **characterized in that** the pressure compensation chamber (39) assigned to the first piston (6) close to the pot base axially adjoins the pot base (26) of the inner plate carrier (16).

11. Actuating arrangement according to Claim 8, 9 or 10, **characterized in that** the pressure compensation chamber (40) assigned to the second piston (7) remote from the pot base is arranged axially on that side of the second piston (7) remote from the pot base which faces away from the first piston (6) close to the pot base.

12. Actuating arrangement according to one of Claims 8 to 11, **characterized in that** the pressure compensation chamber (40) of the second servo device (5) is arranged in the region of that axial edge of the inner plate carrier (16) which is remote from the pot base.

13. Actuating arrangement according to one of Claims 8 to 12, **characterized in that** the pressure compensation chamber (39; 40) assigned to the respective piston (6; 7) is arranged, in spatial terms, either axially to the left or axially to the right of the pressure chamber assigned to the respective piston (6; 7).

14. Actuating arrangement according to one of Claims 8 to 13, **characterized in that** the plates (10, 12; 11, 13) of the two frictional shift elements (2, 3) are supplied with cooling oil which can flow out of the pressure compensation chamber (39) assigned to the first frictional shift element (2) via a flow path (38) which is formed between the radially outer side of said pressure compensation chamber (39) and the radially inner side of the inner plate carrier (16) and which leads through radial openings (36, 37) in the inner plate carrier (16), which radial openings are arranged, in spatial terms, in the region of the plate packs (8, 9) of the two frictional shift elements (2, 3).

15. Actuating arrangement according to one of the preceding claims, **characterized in that** the supply of cooling oil to at least one of the plate packs (8, 9) of the two frictional shift elements (2, 3) takes place through separate feed paths which do not lead through the common inner plate carrier (16).

## Revendications

1. Système d'actionnement (30) pour deux éléments de sélection à friction actionnables par fluide sous pression (2, 3) disposés axialement directement l'un derrière l'autre et radialement essentiellement sur le même diamètre de transmission, réalisés sous forme d'embrayages à disques ou de freins à disques, dans une transmission, dont les disques intérieurs (10, 11) et les disques extérieurs (12, 13) sont fixés sur des supports de disques, et auxquels est à chaque fois associé un dispositif servo (4, 5),
- les disques intérieurs (10, 11) des deux éléments de sélection à friction (2, 3) étant disposés sur un support de disques intérieurs commun (16),
- le support de disques intérieurs (16), en termes de sa géométrie en section transversale, étant réalisé sous forme de pot ouvert axialement d'un côté,
- les deux dispositifs servo (4, 5) étant disposés radialement au moins principalement à l'intérieur de l'espace de pot (27) formé par le support de disques intérieurs en forme de pot (16) et étant positionnés au moins en partie axialement l'un à côté de l'autre et essentiellement radialement en dessous de paquets de disques (8, 9) des deux éléments de sélection à friction (2, 3),
- le premier élément de sélection à friction (2) étant disposé à proximité d'un fond de pot (26) du support de disques intérieurs (16) et
- les deux éléments de sélection à friction (2, 3) étant actionnés individuellement et indépendamment l'un de l'autre par les dispositifs servo (4, 5),
**caractérisé en ce que** chacun des deux dispositifs servo (4, 5) dispose d'un piston déplaçable axialement (6, 7), un plateau de pression (33, 34) orienté radialement étant réalisé au niveau de ce piston dans la région de son diamètre extérieur, l'extrémité libre radialement du plateau de pression agissant sur un paquet de disques (8, 9) associé au dispositif servo associé (4, 5), et venant ainsi en prise dans la direction radiale par le dessus de l'extrémité du support de disques intérieurs (16) ouverte axialement, éloignée du fond du pot, et pouvant venir en prise avec celle-ci dans la direction axiale.

2. Système d'actionnement selon la revendication 1, **caractérisé en ce que**
- les disques intérieurs (11) du paquet de disques (9) du deuxième élément de sélection à friction (3) éloigné du fond du pot présentent des orifices axiaux répartis sur la périphérie (43), et/ou **en ce que** le support de disques intérieurs (16) présente, au moins dans la région du paquet de disques (9) du deuxième élément de sélection à friction (3), au niveau de son côté extérieur radial, des évidements orientés axialement répartis sur la périphérie,
- ces orifices (43) dans les disques intérieurs (11) du deuxième élément de sélection à friction (3), respectivement ces évidements dans le support de disques intérieurs (16), étant orientés axialement de manière identique de manière répartie sur la périphérie et formant à chaque fois une région de passage, à travers laquelle, dans chaque cas, un doigt (35) orienté axialement peut être guidé, lequel est associé au piston (6) du dispositif servo (4) du premier élément de sélection à friction (2) proche du fond du pot,
- et, pour l'actionnement du premier élément de sélection à friction (2), plusieurs de ces doigts axiaux (35) étant prévus, lesquels sont disposés de manière répartie sur la périphérie, traversent les orifices axiaux (43) dans les disques intérieurs (11) du deuxième élément de sélection à friction (3) et/ou les évidements orientés axialement dans le support de disques intérieurs (16) essentiellement dans la direction axiale jusqu'au fond du pot (26), et agissent avec leur extrémité du côté du fond du pot sur le paquet de disques (8) du premier élément de sélection à friction (2).

3. Système d'actionnement selon la revendication 2, **caractérisé en ce que** les orifices (43) et/ou les évidements orientés axialement dans le support de disques intérieurs (16), vus dans la direction périphérique, sont réalisés sous forme d'interruption du profil d'entraînement des disques sur le support de disques intérieurs (16) et, de manière correspondante, sur les disques intérieurs (11) du deuxième paquet de disques (9) éloigné du fond du pot.

4. Système d'actionnement selon la revendication 2 ou 3, **caractérisé en ce que**
- le premier dispositif servo (4) associé au premier élément de sélection à friction (2) proche du fond du pot, est adjacent au fond du pot (26) du support de disques intérieurs (16) et est disposé au moins principalement radialement sous le paquet de disques (8) du premier élément de sélection à friction (2) proche du fond du pot, et en partie radialement sous le paquet de disques (9) du deuxième élément de sélection à friction (3) éloigné du fond du pot,
- le premier dispositif servo (4) présente, au niveau de son piston (6), un plateau de pression (33) qui vient en prise dans la direction radiale par le dessus de l'extrémité du support de disques intérieurs (16) ouverte axialement et éloignée du fond du pot, est connecté fixement ou est en liaison fonctionnelle, au niveau de son diamètre extérieur, avec les doigts (35) orientés axialement, et actionne le paquet de disques (8) du premier élément de sélection à friction (2) lors de sa fermeture par le biais de ces doigts (35) axialement dans la direction du fond du pot (26) du support de disques intérieurs (16),
- le deuxième dispositif servo (5) associé au deuxième élément de sélection à friction (3) éloigné du fond du pot, est axialement adjacent au premier dispositif servo (4) et est disposé au moins en partie radialement en dessous du paquet de disques (9) du deuxième élément de sélection à friction (3) et au moins en partie radialement en dessous d'une portion axiale (31) du piston (6) du premier dispositif servo (4), et
- le deuxième dispositif servo (5) présente, au niveau de son piston (7), un plateau de pression (34), qui vient en prise par le dessus avec le plateau de pression (33) du piston (6) du premier dispositif servo (4) en dehors de l'espace de pot (27) du support de disques intérieurs (16) dans la direction radiale et la direction axiale et actionne le paquet de disques (9) du deuxième élément de sélection à friction (3) lors de sa fermeture axialement dans la direction du fond du pot (26) du support de disques intérieurs (16).

5. Système d'actionnement selon l'une quelconque des revendications 1 à 4, **caractérisé en ce que** le plateau de pression (33) du piston (6) du premier dispositif servo (4) et/ou le plateau de pression (34) du piston (7) du deuxième dispositif servo (5) sont réalisés essentiellement sous forme annulaire.

6. Système d'actionnement selon l'une quelconque des revendications 1 à 4, **caractérisé en ce que** le plateau de pression (33) du piston (6) du premier dispositif servo (4) et/ou le plateau de pression (34) du piston (7) du deuxième dispositif servo (5) sont réalisés sous forme d'un assemblage de plusieurs doigts répartis sur la périphérie.

7. Système d'actionnement selon l'une quelconque des revendications précédentes, **caractérisé en ce que** les deux pistons (6, 7) des dispositifs servo (4, 5) sont disposés axialement directement l'un à côté de l'autre.

8. Système d'actionnement selon l'une quelconque des revendications précédentes, **caractérisé en ce que** le premier dispositif servo (4) et/ou le deuxième dispositif servo (5) présentent une compensation de pression d'actionnement dynamique.

9. Système d'actionnement selon la revendication 8, **caractérisé en ce que** les espaces de compensation de pression (39 ; 40) de la compensation de pression d'actionnement dynamique des dispositifs servo (4 ; 5) sont disposés axialement à côté des espaces de pression respectifs des dispositifs servo (4 ; 5).

10. Système d'actionnement selon la revendication 8 ou 9, **caractérisé en ce que** l'espace de compensation de pression (39) associé au premier piston (6) proche du fond du pot est axialement adjacent au fond du pot (26) du support de disques intérieurs (16).

11. Système d'actionnement selon la revendication 8, 9 ou 10, **caractérisé en ce que** l'espace de compensation de pression (40) associé au deuxième piston (7) éloigné du fond du pot est disposé axialement du côté du deuxième piston (7) éloigné du fond du pot, qui est opposé au premier piston (6) proche du fond du pot.

12. Système d'actionnement selon l'une quelconque des revendications 8 à 11, **caractérisé en ce que** l'espace de compensation de pression (40) du deuxième dispositif servo (5) est disposé dans la région du bord axial éloigné du fond du pot du support de disques intérieurs (16).

13. Système d'actionnement selon l'une quelconque des revendications 8 à 12, **caractérisé en ce que** l'espace de compensation de pression (39 ; 40) associé au piston respectif (6 ; 7), vu spatialement, est disposé soit axialement à gauche soit axialement à droite de l'espace de pression qui est associé au piston respectif (6 ; 7).

14. Système d'actionnement selon l'une quelconque des revendications 8 à 13, **caractérisé en ce que** de l'huile de refroidissement est acheminée aux disques (10, 12 ; 11, 13) des deux éléments de sélection à friction (2, 3), laquelle peut s'écouler hors de l'espace de compensation de pression (39) associé au premier élément de sélection à friction (2) par le biais d'une voie d'écoulement (38), qui est réalisée entre le côté radial extérieur de cet espace de compensation de pression (39) et le côté radial intérieur du support de disques intérieurs (16), et conduit par des ouvertures radiales (36, 37) dans le support de disques intérieurs (16), lesquelles ouvertures sont disposées, vu spatialement, dans la région des paquets de disques (8, 9) des deux éléments de sélection à friction (2, 3).

15. Système d'actionnement selon l'une quelconque des revendications précédentes, **caractérisé en ce que** l'alimentation en huile de refroidissement d'au moins l'un des paquets de disques (8, 9) des deux éléments de sélection à friction (2, 3) s'effectue par des voies d'alimentation séparées, qui ne conduisent pas à travers le support de disques intérieurs commun (16).
